# EUROPÄISCHE PATENTSCHRIFT

(11) **EP 0 647 782 B1**
(45) Veröffentlichungstag und Bekanntmachung des Hinweises auf die Patenterteilung: **14.01.1998**
(21) Anmeldenummer: 94115723.2
(22) Anmeldetag: 06.10.1994
(51) Int. Cl.: F03D 5/06

(54) **Windpaddelanlage**
Wind paddle
Pale éolienne

(30) Priorität: 12.10.1993 DE 4334658
(43) Veröffentlichungstag der Anmeldung: 12.04.1995
(73) Patentinhaber: Alber, Horst, D-72336 Balingen (DE)
(72) Erfinder: Alber, Horst, D-72336 Balingen (DE)
(74) Vertreter: Klocke, Peter, Dipl.-Ing.

(56) Entgegenhaltungen:
- EP-A- 0 490 830
- DE-A- 3 304 766
- DE-A- 3 742 738
- DE-C- 366 246

## Beschreibung

Die Erfindung betrifft eine Windpaddelanlage gemäß dem Oberbegriff des Hauptanspruchs.

Derartige Windpaddelanlagen sind aus der DE 37 42 738 A1 und DE 33 04 766 A1 bekannt. Die bekannten Windpaddelanlagen weisen entweder rechteckförmige drehbare Segel oder einen Ballon als Windangriffsfläche auf. Diese, derart ausgestalteten Windangriffsflächen sind nicht ausreichend, um bei einer derartigen Anlage die Kraft des Windes optimal auszunutzen.

Der vorliegenden Erfindung liegt daher die Aufgabe zugrunde, eine Windpaddelanlage mit einem verbesserten Windpaddel vorzuschlagen.

Diese Aufgabe wird durch eine Windpaddelanlage mit den Merkmalen des Hauptanspruchs gelöst. Weitere vorteilhafte Ausgestaltungen sind den Unteransprüchen zu entnehmen.

Die erfindungsgemäß ausgestaltete Windpaddelanlage weist dazu am oberen Bereiche des Mastes radial zum Mast verlaufende Verstrebungen auf. Zwischen diesen Verstrebungen sind Streifen angebracht, die aus Stoff oder Segeltuch erstellt sein können. Die Anzahl der radial verlaufenden Verstrebungen beeinflussen die Form des Windpaddels. Bei beispielsweise fünf Verstrebungen ergibt sich ein fünfeckiges Windpaddel. Zweckmäßiger Weise sollten die Verstrebungen so angeordnet sein, daß sich ein gleichseitiges Windpaddel ergibt. Grundsätzlich sind dreieckige, viereckige oder vieleckige Windpaddel denkbar, wobei hier ein Kompromiß gefunden werden muß, zwischen der erforderlichen Windangriffsfläche, um eine ausreichende Kraftübertragung zu erreichen, und der Drehbeweglichkeit und aus Ausrichtung des Windpaddels.

Diese preiswerte und ein geringes Gewicht aufweisende erfindungsgemäße Ausführung des Windpaddels vergrößert die Windangriffsfläche aufgrund des Winddrucks automatisch, bis zu einem Maximalwert. Beim Kippen des Mastes gelangen die hinteren Streifen ebenfalls in den Windstrom, so daß sich die Angriffsfläche vergrößert. Ab einer bestimmten Auslenkung des Mastes bläst der Wind zwischen den einzelnen Streifen hindurch. Aufgrund dieser besonderen Ausgestaltung wird ein Auf- und Niederschwenken des Mastes erreicht, was zu Energieerzeugung benutzt werden kann. Gemäß einer bevorzugten Ausführungsform sind die einzelnen Streifen parallel zueinander angeordnet, wobei der Abstand der Streifen ungefähr gleich der Höhe der Streifen ist. Die Streifen können bei nicht ausgelenktem Mast senkrecht oder schräg zum Mast angeordnet sein. Bei der ersten Ausgestaltung gelangt durch die Neigung des Mastes zwar immer mehr Streifenfläche in den Wind, wobei jedoch die Windangriffsfläche jedes einzelnen Streifens durch die Veränderung des Winkels abnimmt. Bei schräg zum Wind angeordneten Streifen nimmt bei der Neigung des Mastes die Windangriffsfläche einerseits dadurch zu, daß immer mehr Streifen in den Wind gelangen, und darüberhinaus dadurch, daß durch die Neigung der Streifen jeder einzelne Streifen immer mehr Windangriffsfläche bietet. Der Abstand der Streifen zueinander ist dabei so zu wählen, daß bei einer Neigung des Mastes, die dem Winkel der schrägen Streifen entspricht, die maximale, d. h. senkrecht zum Wind stehende, Windangriffsfläche zu Verfügung steht. Beginnend bei dem inneren Streifen erhält man den Fußpunkt des nächsten Streifens durch eine gedachte Verbindungslinie, die senkrecht zu den Streifenflächen steht und durch den oberen Befestigungspunkt des ersten Streifens und den unteren Befestigungspunkten (Fußpunkt) des nächsten Streifens verläuft. Auf diese Art und Weise stehen beispielsweise bei einer Neigung der Streifen um 30° diese bei einer Auslenkung des Mastes um 30° alle mit ihrer gesamten Fläche senkrecht zum Wind, so daß dann die maximale Windangriffsfläche zur Verfügung steht. Bei ansteigendem Wind wird das Windpaddel weiter geneigt, so daß ein Teil des Windstromes zwischen den einzelnen Streifen hindurch gelangen kann und die Windangriffsfläche wieder abnimmt.

Gemäß einer bevorzugten Ausführungsform sind die Streifen mit ihrer dem Mast abgewandten Flächen vom Mast weg abgewinkelt. Dies stellt eine Kombination aus senkrechten und schräg gestellten Streifen dar und bewirkt dadurch eine weiter verbesserte Windangriffsfläche auch bei geringfügigen Auslenkungen des Mastes. In dem Augenblick, in dem sich der Mast neigt, wird die Windangriffsfläche des senkrechten Teils jedes Streifens geringer, während die Windangriffsfläche des schräg stehenden Teils jedes Streifens sich vergrößert. Wie bereits oben erwähnt, vergrößert sich insgesamt die Windangriffsfläche dadurch, daß durch die Neigung immer mehr Streifen in den Wind gestellt werden. Die bei nicht ausgelenktem Mast senkrecht stehende Fläche der Streifen kann dabei genauso groß sein wie die abgewinkelte Fläche des jeweiligen Streifens. In einer bevorzugten Ausführungsform entspricht die Höhe der senkrechten Fläche der halben Höhe des Streifes und der Winkel zwischen der senkrechten Fläche und der abgewinkelten Fläche beträgt 45°.

Der Abstand zwischen den Streifen ist vorteilhafter Weise so gewählt, daß bei einer Neigung des Mastes um den Betrag der Neigung der abgewinkelten Fläche, die abgewinkelte Fläche dem senkrecht auftreffenden Wind ausgesetzt ist. Der Abstand ergibt sich somit aus der eineinhalbfachen Höhe des Streifens geteilt durch den Tangens des Neigungswinkels. Bei einer abgewinkelten Fläche von 45° steht die abgewinkelte Fläche bei einer Neigung des Mastes von 45° mit ihrer vollen Fläche dem Wind als Angriffsfläche zur Verfügung. Bei einer weiteren Neigung des Mastes gelangt wieder mehr Wind zwischen den Streifen hindurch, so daß die Windangriffsfläche sich verringert.

Weitere vorteilhafte Ausgestaltungen der Erfindung sind anhand eines Ausführungsbeispiel in Verbindung mit den Zeichnungen erläutert.

Es stellen dar:
- Figur 1: ein Schnitt durch eine Windpaddelanlage mit senkrechten Streifen;
- Figur 2: eine Draufsicht auf das Paddel gemäß Figur 1;
- Figur 3: eine Draufsicht auf ein Windpaddel mit abgewinkelten Streifen;
- Figur 4: einen Schnitt durch das Windpaddel entlang der Linie A-B; und
- Figur 5: eine Schnittdarstellung des Windpaddels bei einer Neigung des Mastes von 45°.

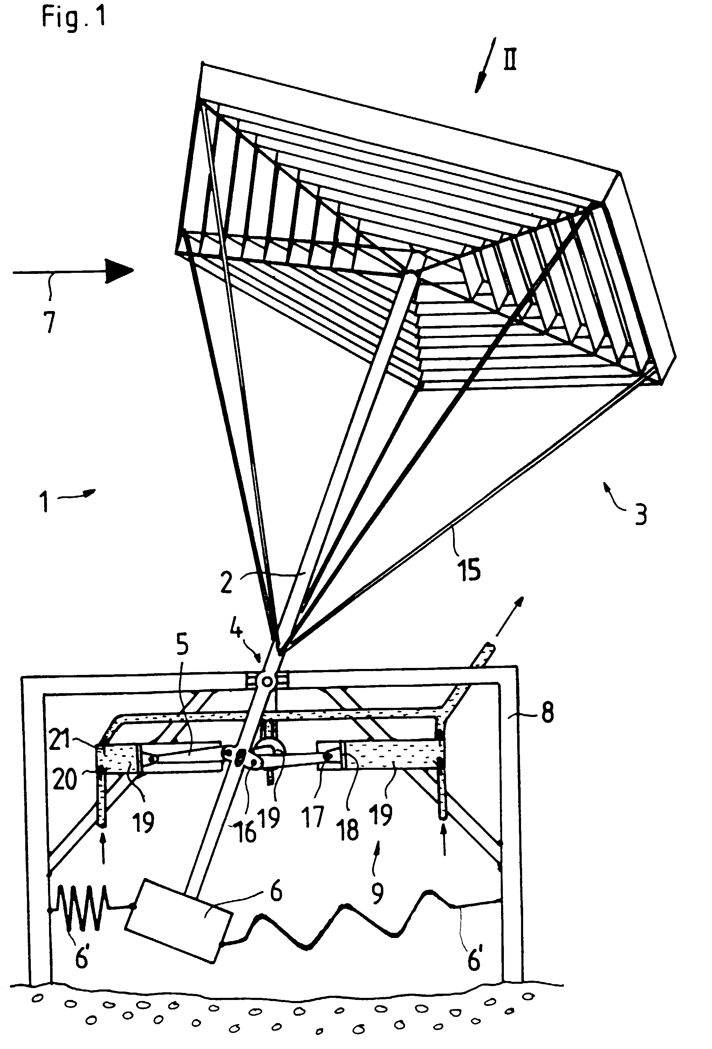

Die in Figur 1 dargestellte Windpaddelanlage 1 weist am oberen Ende eines Masts 2 ein Windpaddel 3 auf. Der Mast 2 ist mit einem Schwenklager 4 beispielsweise mit einem Kardangelenk, welches etwa im unteren Drittel angeordnet ist, versehen, so daß er von seiner senkrechten Ruhelage in jede beliebige horizontale Richtung verschwenkbar ist.

An dem dem Windpaddel 3 gegenüberliegenden Ende des Masts 2 ist ein Gegengewicht 6 angebracht. Dieses Gegengewicht 6 sorgt für das Wiederaufrichten des Masts 2, nachdem er durch die Windkraft 7 aus seiner vertikalen Lage ausgelenkt worden ist. Das Aufrichten kann auch alleine oder gemeinsam mit dem Gegengewicht 6 mit Hilfe von Rückstellfedern 6' geschehen, die zwischen Mast 2 und Gestell 8 eingespannt sind. Zwischen dem Mast 2 und einem Gestell 8 ist eine Fluidfördereinrichtung 9 vorgesehen, die beispielsweise aus vier sternförmig angeordneten Hydraulikzylindern 19 aufgebaut sein kann, in denen jeweils ein Kolben 18 verschieblich gelagert ist. Ein jeder Zylinder 19 und Kolben 18 grenzt einen Hubraum ab, in den durch die Kolbenbewegung Wasser angesaugt und angestoßen wird. Als Rückschlagventile ausgebildete Einlaß- bzw. Auslaßventile 20 bzw. 21 legen die Strömungsrichtung fest. Ein jeder Kolben 18 wird über ein Pleuel 5 angetrieben, welches seinerseits am Mast 2 befestigt ist. Die Pleuel 5 sind mit Hilfe von Gelenken 16 und 17, die beliebiger Richtung quer zur Verlängerung des entsprechenden Hydraulikzylinders 19 bzw. des Pleuels 5 schwenkbar sind, an einem Ende mit dem Mast 2 bzw. am anderen Ende mit dem Kolben 18 des Hydraulikzylinders 19 verbunden. An einem Hydraulikzylinder 19 ist die Zu- und Abfuhr des zu fördernden Mediums schematisch dargestellt.

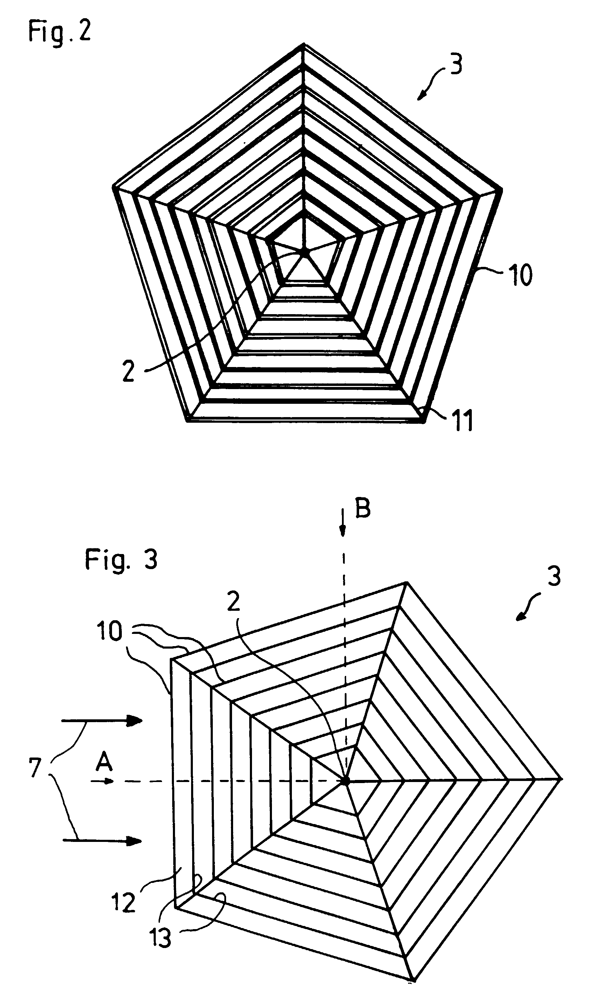

Das Windpaddel, das in Figur 2 in der Draufsicht dargestellt ist, weist Streifen 10 aus Stoff oder ähnlichem Material zwischen radial verlaufenden Verstrebungen 11, die sich am oberen Ende des Mast schirmartig ausbreiten, auf. Durch die quergespannten Streifen 10 wird eine möglichst große Windangriffsfläche, vor allem bei leichter Auslenkung, geboten und außerdem eine turbulente und somit instationäre Windströmung provoziert. Zur Erhöhung der Stabilität können noch Stäbe 15 oder Drähte zwischen den äußeren Enden der Verstrebungen 11 und etwas oberhalb des Schwenklagers am Mast 2 angebracht sein.

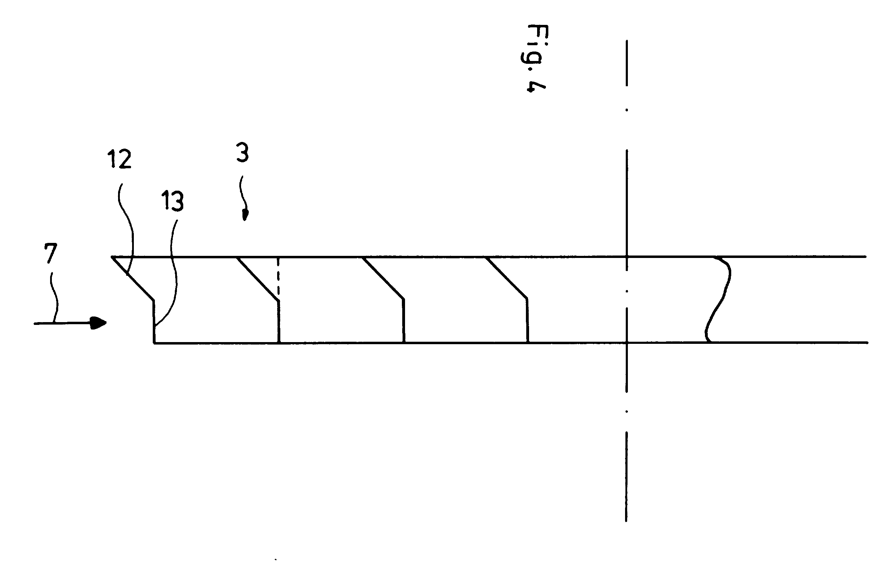

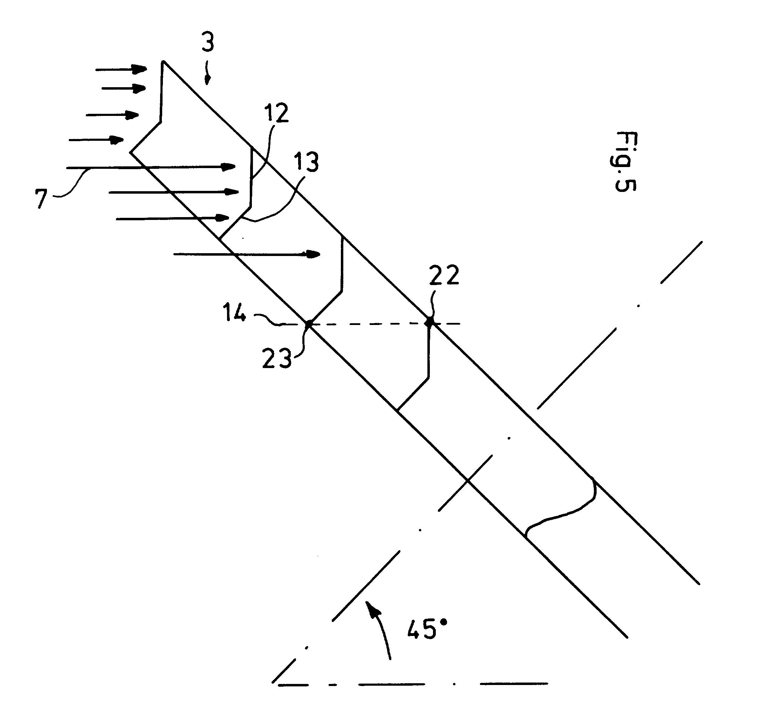

Figur 3 zeigt die Draufsicht auf ein Windpaddel 3 mit Streifen 10, die eine abgewinkelte Fläche 12 aufweisen. Die Höhe der senkrechten Fläche 13 entspricht der halben Höhe des Streifens 10. Aus dem in Figur 4 dargestellten Schnitt entlang der Linie A-B ist die Abwinklung der Streifen 10 besser ersichtlich. Die Streifen 10 weisen eine senkrechte Fläche 13 und eine abgewinkelte Fläche 12 auf, die in diesem Ausführungsbeispiel um 45° gegenüber der senkrechten Fläche abgewinkelt ist. In Ruhestellung ist somit die vordere Fläche dem Wind ausgesetzt. Durch den Einfluß des Windes wird der Mast geneigt, so daß auch die hinteren Streifen in den Wind gelangen. Wie aus Figur 5 ersichtlich, gelangt bei einer Neigung um 45° die senkrechte Fläche 13 aller Streifen in eine senkrechte Stellung zum Wind. Der Abstand zwischen den einzelnen Streifen 10 ist entsprechend gewählt, so daß die Verbindungslinie 14, die durch den oberen Punkt 22 des ersten Streifens und den Fußpunkt 23 des nächsten Streifens senkrecht zu der abgewinkelten Fläche verläuft. Damit wird eine besonders günstige Wirkungsweise der Windpaddelanlage erreicht. Bei weiter ansteigendem Wind verringert sich die Windangriffsfläche. Eine Beschädigung der Anlage ist damit nicht möglich, da ein immer größer werdender Windanteil dann zwischen den einzelnen Streifen hindurchströmt.

## Patentansprüche

1. Windpaddelanlage, die einen um jede beliebige horizontale Achse schwenkbar gelagerten, durch eine Aufrichtkraft, in etwa vertikaler Richtung nachgiebig gehaltenen Mast (2), ein daran angebrachtes Windpaddel (3), mindestens eine mit dem Mast (2) verbundene Fluidfördereinrichtung (9), die bei einer Auslenkbewegung des Mastes (2) ein Fluid fördert, und ein Gestell (8) aufweist, **dadurch gekennzeichnet**, daß das Windpaddel (3) durch am oberen Bereich des Masts (2) zwischen radial zum Mast (2) verlaufenden Verstrebungen (11) angebrachte Streifen (10) gebildet wird.

2. Windpaddelanlage nach Anspruch 1, **dadurch gekennzeichnet**, daß die Streifen (10) zwischen zwei Verstrebungen (11) parallel zueinander angeordnet sind.

3. Windpaddelanlage nach Anspruch 2, **dadurch gekennzeichnet**, daß der Abstand der Streifen ungefähr gleich der Höhe der Streifen (10) ist.

4. Windpaddelanlage nach Anspruch 2, **dadurch gekennzeichnet**, daß die Streifen (10) mit ihrer dem Mast (2) abgewandten Fläche vom Mast weg abgewinkelt sind.

5. Windpaddelanlage nach Anspruch 4, **dadurch gekennzeichnet**, daß bei nicht ausgelenktem Mast (2) die Streifen (10) eine senkrechte Fläche (13) und eine gleich große abgewinkelte Fläche (12) aufweisen.

6. Windpaddelanlage nach Anspruch 4, **dadurch gekennzeichnet**, daß bei nicht ausgelenktem Mast (2) die Streifen (10) eine senkrechte Fläche (14) und eine abgewinkelte Fläche (12) aufweisen, wobei die Höhe der senkrechten Fläche der halben Höhe des Streifens entspricht.

7. Windpaddelanlage nach einem der vorangegangenen Ansprüche 4 bis 6, **dadurch gekennzeichnet**, daß der Winkel zwischen der senkrechten Fläche (13) und der abgewinkelten Fläche (12) 45° beträgt.

8. Windpaddelanlage nach einem der vorangegangenen Ansprüche 4 bis 7, **dadurch gekennzeichnet**, daß der Abstand zwischen den Streifen (10) so gewählt ist, daß bei einer Auslenkung des Masts um den Betrag der Neigung der abgewinkelten Fläche (12) die abgewinkelte Fläche dem senkrecht auftreffenden Wind (7) ausgesetzt ist.

## Claims

1. Wind paddle system having a mast (2) pivotably mounted about any random horizontal axis and resiliently held in a roughly vertical direction by a righting force, a wind paddle (3) fitted to said mast, at least one fluid delivery device (9) connected to the mast (2) and which delivers a fluid in the case of a deflection movement of the mast (2), and a frame (8), characterized in that the wind paddle (3) is formed by strips (10) fitted to the upper area of the mast (2) between braces (11) running radially to the mast (2).

2. Wind paddle system according to claim 1, characterized in that the strips (10) are arranged parallel to one another between two braces (11).

3. Wind paddle system according to claim 2, characterized in that the strip spacing is roughly the same as the height of the strips (10).

4. Wind paddle system according to claim 2, characterized in that the strips (10) are bent away from the mast with their surface remote from said mast (2).

5. Wind paddle system according to claim 4, characterized in that in the case of an undeflected mast (2), the strips (10) have a vertical surface (13) and a roughly equally large, bent surface (12).

6. Wind paddle system according to claim 4, characterized in that with an undeflected mast (2) the strips (10) have a vertical surface (14) and a bent surface (12), the height of the vertical surface corresponding to half the height of the strip.

7. Wind paddle system according to one of the preceding claims 4 to 6, characterized in that the angle between the vertical surface (13) and the bent surface (12) is 45°.

8. Wind paddle system according to one of the preceding claims 4 to 7, characterized in that the spacing between the strips (10) is chosen in such a way that with a deflection of the mast by the quantity of the inclination of the bent surface (12), the latter is exposed to the vertically impacting wind (7).

## Revendications

1. Installation éolienne à lamelles, constituée d'un mât (2), monté oscillant autour de n'importe quel axe horizontal et maintenu dans une position flexible à peu près verticale par une force de rappel, d'une éolienne à lamelles (3) montée sur l'axe, d'au moins un transporteur de fluide (9) solidaire du mât (2), lequel fluide est mis en mouvement à chaque oscillation du mât (2), et un châssis (8), **caractérisé par le fait** que l'éolienne (3) est composée de lamelles (10) montées au haut du mât (2) entre des entretoises (11) disposées radialement au mât (2).

2. Installation éolienne à lamelles selon la revendication 1, **caractérisé par le fait** que les lamelles (10) sont disposées parallèlement entre elles entre deux entretoises (11).

3. Installation éolienne à lamelles selon la revendication 2, **caractérisé par le fait** que l'espace entre les lamelles est à peu près identique à la hauteur des lamelles (10).

4. Installation éolienne à lamelles selon la revendication 2, **caractérisé par le fait** que la surface des lamelles (10) qui ne fait pas face à l'axe (2) est inclinée.

5. Installation éolienne à lamelles selon la revendication 4, **caractérisé par le fait** que, lorsque le mât (2) n'est pas en oscillation, les lamelles (10) présentent une surfacc verticale (13) et une surface inclinée (12) de même dimension.

6. Installation éolienne à lamelles selon la revendication 4, **caractérisé par le fait** que, lorsque le mât (2) n'est pas en oscillation, les lamelles (10) présentent une surface verticale (14) et une surface inclinée (12), la hauteur de la surface verticale correspondant à la moitié de la hauteur de la lamelle.

7. Installation éolienne à lamelles selon l'une des revendications précédentes 4 à 6, **caractérisé par le fait** que la surface verticale (13) forme avec la surface inclinée (12) un angle de 45°.

8. Installation éolienne à lamelles selon l'une des revendications précédentes 4 à 7, **caractérisé par le fait** que l'espace entre les lamelles (10) est choisi de telle sorte que, lorsque le mât (2) est oscillé avec la même inclinaison que la surface inclinée (12), la surface inclinée est exposée au vent de direction verticale (17).
